Europäisches Patentamt

European Patent Office

Office européen des brevets

(11) Veröffentlichungsnummer: **0 473 093 A2**

# EUROPÄISCHE PATENTANMELDUNG

(21) Anmeldenummer: **91114270.1**

(51) Int. Cl.5: **C01B 21/04**

(22) Anmeldetag: **26.08.91**

(30) Priorität: **31.08.90 DE 4027600**

(43) Veröffentlichungstag der Anmeldung:
**04.03.92 Patentblatt 92/10**

(84) Benannte Vertragsstaaten:
**AT CH DE ES FR GB IT LI NL**

(71) Anmelder: **Linde Aktiengesellschaft**
**Abraham-Lincoln-Strasse 21**
**W-6200 Wiesbaden(DE)**

(72) Erfinder: **Strigl, Reinhard, Dipl.-Ing.**
**Zeitlerstrasse 1**
**W-8000 München 50(DE)**

(74) Vertreter: **Schaefer, Gerhard, Dr.**
**Linde Aktiengesellschaft Zentrale**
**Patentabteilung**
**W-8023 Höllriegelskreuth(DE)**

(54) Verfahren zur Gewinnung von Stickstoff aus Luft mittels Membranzerlegung.

(57) Zur Gewinnung von Stickstoff mittels Membranzerlegung wird als Einsatzgas das bei der Verbrennung von Kohlenwasserstoffen mit Luft entstehende Abgas eingesetzt. Durch die Verbrennung wird der Sauerstoff aus der Luft gebunden, wodurch sich die Reinheit des aus dem Abgas erzeugten Stickstoffproduktes erhöht. Wird zur Abgaserzeugung eine Verbrennungskraftmaschine verwendet, fällt das Einsatzgas bereits mit Vordruck und erwärmt an, so daß zur Kompression des Einsatzgases vor der Membranzerlegung eine geringere Verdichterleistung ausreicht und Gasvorwärmerstationen entfallen können. Außerdem kann die Verbrennungskraftmaschine als Antrieb für den Verdichter des Einsatzgases dienen.

EP 0 473 093 A2

Die Erfindung betrifft ein verfahren zur Gewinnung von Stickstoff aus Luft mittels Membranzerlegung, indem das Einsatzgas komprimiert und in einer Membrantrenneinheit selektiv Stickstoff abgetrennt und gewonnen wird.

Ein bekanntes Verfahren zur Gewinnung von Stickstoff aus Luft ist in dem US-Patent 4,894,068 beschrieben. Dort wird komprimierte Luft durch eine Membrantrenneinheit geleitet, in welcher der Sauerstoff, das Kohlendioxid, Wasser sowie andere Gase von dem zu gewinnenden Stickstoff abgetrennt werden. Hohlfaser-Membranen werden zur Durchführung des bekannten Verfahrens als besonders günstig erachtet. Derartige Hohlfaser-Membranen erzeugen jedoch einen relativ unsauberen Stickstoff, da die einzelnen Luftbestandteile unterschiedliche Permeationsraten besitzen. Besonders Sauerstoff kann nur ungenügend aus dem Luftstrom abgetrennt werden. Das bekannte Verfahren schlägt zur Lösung dieses Problems vor, zwei in Reihe geschaltete Membrantrenneinheiten zu verwenden. Auf diese Weise läßt sich der Sauerstoffanteil im Stickstoffprodukt auf 1000 ppm und weniger reduzieren.

Der Erfindung lag die Aufgabe zugrunde, ein Membrantrennverfahren zur Gewinnung von Stickstoff aus Luft zu schaffen, welches bei verringertem Aufwand hohe Reinheit des Produktes und eine verbesserte Gesamteffizienz gewährleistet.

Die Erfindung löst diese Aufgabe dadurch, daß der Sauerstoff der Luft durch Verbrennung mit Kohlenwasserstoffen gebunden und das so gewonnene Abgas der Membrantrenneinheit zugeführt wird.

Wird als Einsatzgas nicht Luft mit ihrem hohen Sauerstoffanteil verwendet, sondern ein weitgehend bis vollständig vom Sauerstoff befreites Gasgemisch, läßt sich eine Membrantrenneinheit gegenüber dem Stand der Technik einsparen. Gemäß der Erfindung wird das Einsatzgas durch Verbrennung von Kohlenwasserstoffen mit Luft erzeugt. Bei der Verbrennung von Kohlenwasserstoffen mit Sauerstoff entsteht $CO_2$ und $H_2O$, welche besser durch die Membran permeieren. Die zu verbrennenden Kohlenwasserstoffe können einzeln wie im Gemisch eingesetzt werden. Günstig sind beispielsweise Benzin, Dieselkraftstoff oder Erdgas.

Die Erzeugung von Einsatzgas für die Membranzerlegung kann durch Verbrennung von Kohlenwasserstoffen auf unterschiedliche Art und Weise erfolgen. Die Erfindung weiterbildend wird jedoch bevorzugt das Abgas einer Verbrennungskraftmaschine für die Membranzerlegung herangezogen. Geeignete Verbrennungskraftmaschinen sind Otto- und Dieselmotoren.

Da das zu zerlegende Gasgemisch in der Regel vor seiner Einleitung in die Membrantrenneinheit über einen Filter vorgereinigt wird, können unerwünschte Reste nicht verbrannter Kohlenwasserstoffe bereits im Vorfeld abgetrennt werden. Als besonders geeignet erweist sich jedoch die Verwendung eines Ottomotors mit einem 3-Wege-Katalysator, welcher mit geringem Luftüberschuß betrieben wird. Die Kohlenmonoxid- und Kohlenwasserstoff-Anteile im Abgas können dann gering gehalten werden. Dieses Abgas mit wenig Sauerstoff, aber viel Kohlendioxid und Wasser wird als Einsatzgas für die Membrantrenneinheit verwendet.

Ein weiterer Vorteil des erfindungsgemäßen Vorgehens besteht darin, daß das durch eine Verbrennungskraftmaschine erzeugte Abgas bereits einen Vordruck vom 1,5 - 4 bar hat. Es reduziert sich damit die zur weiteren Kompression des Einsatzgases notwendige Verdichtungsenergie.

Besonders vorteilhaft ist, das Einsatzgas in warmen Zustand in die Membrantrenneinheit zu führen, da hierdurch die Permeationsfähigkeit für die abzutrennenden Komponenten gesteigert wird. Während beim bekannten Stand der Technik das Einsatzgas Luft von Umgebungstemperatur auf die optimale Betriebstemperatur der Membrantrennanlage angewärmt werden muß, fällt beim erfindungsgemäßen Verfahren aufgrund der Exothermie des Verbrennungsprozesses bereits warmes bzw. heißes Einsatzgas Abgas an. Dieses wird erfindungsgemäß auf die Arbeitstemperatur der Membrantrenneinheit abgekühlt. Die Erfindung ausgestaltend erfolgt die Abkühlung dabei zumindest teilweise gegen die der Verbrennungskraftmaschine zugeführte Luft.

In besonders vorteilhafter Ausgestaltung des erfindungsgemäßen Verfahrens wird die Verbrennungskraftmaschine nicht nur zur Erzeugung von Einsatzgas verwendet, sondern sie dient gleichermaßen zum Antrieb des Verdichters für die Kompression des zu zerlegenden Gasgemisches.

Mit dem erfindungsgemäßen Verfahren läßt sich eine Membrantrennanlage betreiben, deren Durchsatzleistung höher ist, als die einer bekannten Anlage mit gleichgroßer Membranfläche, bzw. die erfindungsgemäße Membrantrennanlage kann kleiner ausgelegt werden als eine Anlage herkömmlicher Art. Des weiteren ist die erzielbare Stickstoffreinheit größer.

Eine Membrantrennanlage nach dem erfindungsgemäßen Prinzip, in welcher der Verdichter für das zu zerlegende Einsatzgas eine Verbrennungskraftmaschine ist, arbeitet wirtschaftlicher als eine Anlage mit elektromotorischem Verdichterantrieb. Da das als Einsatzgas verwendete Abgas der Verbrennungskraftmaschine bereits einen Vordruck besitzt, benötigt der Verdichter eine geringere Leistung. Ein Gasvorwärmer kann gänzlich entfallen.

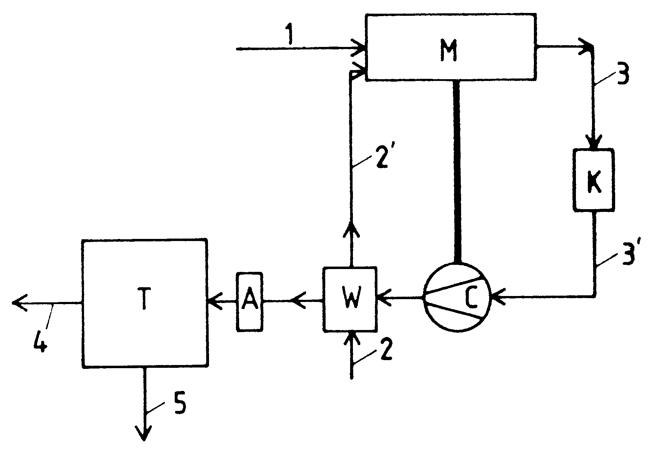

Das erfindungsgemäße Verfahren sei nun anhand der Figur beispielhaft beschrieben.

Einer Verbrennungskraftmaschine M, hier insbesondere einem Ottomotor, wird ein Kohlenwasserstoffgemisch, d.h. beispielsweise Benzin oder Erdgas, über Leitung 1 zugeführt. Die zur Verbrennung benötigte Luft wird über Leitung 2 herangeführt und nach indirektem Wärmetausch in Wärmetauscher W über Leitung 2' der Verbrennungskraftmaschine M zugeleitet. Das im Betrieb der Verbrennungskraftmaschine entstehende Abgas 3 wird mit Hilfe eines Katalysators K weitgehend von noch vorhandenen nicht verbrannten Kohlenwasserstoffen und CO befreit. Das so behandelte Abgas 3' enthält nurmehr $N_2$, $CO_2$, $H_2O$ und in Spuren $CH_4$ und CO. Dieses Abgas wird in Verdichter C auf einen Druck von 10 bar komprimiert, wobei der Verdichter von der Verbrennungskraftmaschine M angetrieben wird. Nach der Verdichtung wird das heiße Abgas in Wärmetauscher W gegen anzuwärmende Luft der Leitung 2 und eventuell gegen weitere Wärmetauschmedien auf die Arbeitstemperatur der Membrantrenneinheit abgekühlt. In einem Wasserabscheider A wird daraufhin ein Großteil des vorhandenen Wassers abgetrennt. Der Wasserabscheider kann dabei die durch die Abkühlung des heißen Abgases einsetzende Kondensation des Wasserdampfes ausnützen. Die Abscheidung kann jedoch auch durch adsorptive Maßnahmen erfolgen. Das weitgehend von Wasser befreite warme Abgas wird einer Membrantrenneinheit T zugeleitet. Diese Membrantrenneinheit besteht aus einem Membranhohlfaserbündel, welches bevorzugt ein Polyolefinhohlfaserbündel ist. In dieser Membrantrenneinheit T werden $CO_2$, $H_2O$ und die übrigen Gase weitgehend vom zu gewinnenden Stickstoff abgetrennt und über Leitung 5 abgeführt. Über Leitung 4 fällt ein Stickstoffprodukt an, welches eine hohe Reinheit besitzt.

Mit einem kurzen Beispiel zeigt sich die Möglichkeit des erfindungsgemäßen Verfahrens. Ein Ottomotor von 2 Liter Hubraum mit 74 kWh Leistung produziert bei optimaler Drehzahl (höchstem Drehmoment) bei ca. 3500 U/m, ca. 200 $m^3$/h Abgas. Bei einem spezifischen Energieverbrauch zur Zerlegung des Abgases von ca. 0,5 kW/$m^3$ und 10 bar können mit dem erfindungsgemäßen Prinzip ungefähr 150 $m^3$/h Stickstoff erzeugt werden.

**Patentansprüche**

1. Verfahren zur Gewinnung von Stickstoff aus Luft mittels Membranzerlegung, indem das Einsatzgas komprimiert und in einer Membrantrenneinheit selektiv Stickstoff abgetrennt und gewonnen wird, dadurch gekennzeichnet, daß der Sauerstoff der Luft durch Verbrennung mit Kohlenwasserstoffen gebunden und das so gewonnene Abgas der Membrantrenneinheit als Einsatzgas zugeführt wird.

2. Verfahren nach Anspruch 1, dadurch gekennzeichnet, daß das Einsatzgas das Abgas einer Verbrennungskraftmaschine ist.

3. Verfahren nach Anspruch 1 oder 2, dadurch gekennzeichnet, daß das Einsatzgas auf die Arbeitstemperatur der Membrantrenneinheit abgekühlt wird.

4. Verfahren nach Anspruch 2 oder 3, dadurch gekennzeichnet, daß das Einsatzgas zumindest teilweise gegen die der Verbrennungskraftmaschine zugeführte Luft abgekühlt wird.

5. Verfahren nach den Ansprüchen 2 - 4, dadurch gekennzeichnet, daß die Verbrennungskraftmaschine den Verdichter zur Komprimierung des Einsatzgases antreibt.